(19) **Europäisches Patentamt**
**European Patent Office**
**Office européen des brevets**

(11) **EP 4 455 085 A1**

(12) **EUROPEAN PATENT APPLICATION**

(43) Date of publication:
**30.10.2024 Bulletin 2024/44**

(21) Application number: **23170108.7**

(22) Date of filing: **26.04.2023**

(51) International Patent Classification (IPC):
**C01B 32/05** $^{(2017.01)}$    **C01B 32/205** $^{(2017.01)}$
**C04B 11/028** $^{(2006.01)}$    **C10B 3/00** $^{(2006.01)}$
**F27B 1/10** $^{(2006.01)}$

(52) Cooperative Patent Classification (CPC):
**C01B 32/205; C01B 32/05; C04B 11/028;
F27B 1/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SGL Carbon SE
65201 Wiesbaden (DE)**

(72) Inventors:
• **SCHREINER, Christian
86405 Meitingen (DE)**
• **SCHREINER, Tino
86405 Meitingen (DE)**
• **LOSHER, Richard
86405 Meitingen (DE)**

(54) **GRAPHITIZATION FURNACE COMPRISING CHANNEL COMPRISING PLATE-SHAPED WALL SEGMENTS**

(57) The present disclosure relates to a graphitization furnace 100 configured to graphitize particulate carbonaceous material comprising a raw material inlet 160 and a product outlet 170, and a channel 110 connecting the raw material inlet 160 and the product outlet 170. The channel 110 comprises an upstream section 120 closer to the raw material inlet 160 and a downstream section 130 closer to the product outlet 170. The upstream section 120 has a first cross-sectional area closer to the raw material inlet 160 and a second cross-sectional area closer to the product outlet 170, wherein the second cross-sectional area is larger than the first cross-sectional area. The upstream section 120 and/or the downstream section 130 comprises a plurality of plate-shaped wall segments 140 and the upstream section 120 and/or the downstream section 130 has a polygonal cross-sectional shape.

Figure 1

EP 4 455 085 A1

## Description

### Technical Field

The present invention relates to the field of graphitization furnaces. More specifically, the present invention relates to graphitization furnaces comprising a channel comprising plate-shaped wall segments.

### Background

The most common commercially used anode material in lithium-ion batteries is graphite. The graphite can be lithiated to the state of $LiC_6$, which correlates to a theoretical maximal capacity of 372 mAh/g.

Artificial graphite may be produced by heating carbonaceous starting materials, such as coke and/or pitch, to temperatures of about 3000 °C under exclusion of oxygen. The heating may be performed in batch or continuous furnaces. In a continuous furnace, carbonaceous material is typically conveyed along a heated channel, transitioning to graphite while being conveyed.

The process of continuous graphitization may be advantageous because it may produce graphite more efficiently than a batch process and may allow for industrial scale production. However, the inventors have found that some carbonaceous materials, in particulate carbonaceous material in the form of powder, may have a tendency to cake in continuous furnaces. The caking may lead to an inhomogeneous temperature distribution, which in turn may result in a reduced product quality and consistency. It also may result in reduced process efficiency and higher production costs due to interruptions in the continuous process while resolving caking-induced channel blockage, as well as the need to re-process some products that have not been fully graphitized due to the caking.

In order to address the aforementioned issues, the inventors have developed a graphitization furnace.

### Summary

The present disclosure relates to a graphitization furnace configured to graphitize particulate carbonaceous material comprising a raw material inlet and a product outlet, and a channel connecting the raw material inlet and the product outlet. The channel comprises an upstream section and a downstream section. The upstream section has a first cross-sectional area closer to the raw material inlet and a second cross-sectional area closer to the product outlet, wherein the second cross-sectional area is larger than the first cross-sectional area. The upstream section and/or the downstream section comprises a plurality of plate-shaped wall segments and the upstream section and/or the downstream section has a polygonal cross-sectional shape.

In some embodiments, the cross-sectional shape, perpendicular to the longitudinal axis, may be polygonal with n corners, wherein n is an integer between 3 and 12, more specifically triangular, rectangular, square, or hexahedral, and in particular rectangular.

In some embodiments, the downstream section may have a fourth cross-sectional area closer to a product outlet than a third cross-sectional area, wherein the fourth cross-sectional area is greater than the third cross-sectional area.

In some embodiments, the cross-sectional shape may be formed by the plurality of plate-shaped wall segments.

In some embodiments, the upstream section and the downstream section may be spaced apart or adjoining, in particular adjoining.

In some embodiments, between the upstream section and the downstream section an edge-like or arched transition feature may be disposed.

In some embodiments, the graphitization furnace may be a vertical graphitization furnace. In some embodiments, the graphitization furnace may be a vertical graphitization furnace and the downstream section may be provided in the lower third, the lower fourth, the lower fifth or the lower sixth of the channel, more specifically the lower fifth or lower sixth of the channel, and in particular in the lower fifth of the channel, wherein lower means closer to the gravitational center of the earth. In some embodiments, the graphitization furnace is a vertical graphitization furnace and the upstream section may be provided in the lower half, the lower third, the lower fourth or the lower fifth of the channel, more specifically the lower fifth or lower sixth of the channel, and in particular in the lower fifth of the channel, wherein lower means closer to the gravitational center of the earth.

In some embodiments, the graphitization furnace may be a vertical graphitization furnace and the downstream section may be provided in the lower third, the lower fourth, the lower fifth or the lower sixth of the channel, more specifically the lower fifth or lower sixth of the channel, and in particular in the lower fifth of the channel; and the upstream section may be provided in the lower half, the lower third, the lower fourth or the lower fifth of the channel, more specifically the lower fifth or lower sixth of the channel, and in particular in the lower fifth of the channel, wherein lower means closer to the gravitational center of the earth.

In some embodiments, the channel may comprise a heating zone, a high temperature reaction zone and a cooling zone.

In some embodiments, the downstream section may be disposed in the high temperature reaction zone and/or the cooling zone, in particular the cooling zone.

In some embodiments, at least one plate-shaped wall segment of the plurality of plate-shaped wall segments of the channel may be angled radially outward relative to the central-channel-axis.

In some embodiments, the upstream section may have a first length L1 and the downstream section may have a second length L2, more specifically the upstream section and the downstream section may be adjoining and the upstream section and downstream section may have a combined length L3, wherein the ratio L2/L3 may be smaller than 0.5, more specifically smaller than 0.3 and in particular smaller than 0.2.

In some embodiments, the ratio of L1/L3 may be between about 0.03 to about 0.5, more specifically 0.05 to about 0.3 and in particular between about 0.1 to about 0.2.

In some embodiments, the channel may have a first inner diameter D1, a second inner diameter D2, a third inner diameter D3 and a fourth inner diameter D4 in the plane of the first, second, third and fourth cross-sectional area respectively, and the inner diameters meet the requirement $\frac{(D2-D1)}{L1} < \frac{(D4-D3)}{L2}$ .

In some embodiments, the channel may have a first angle $\alpha_1$ defined as and meeting the criterion: $\alpha_1 = \arctan\left(\frac{D2-D1}{2*L1}\right)$ and a second angle $\alpha_2$ defined as and meeting the criterion: $\alpha_2 = \arctan\left(\frac{D4-D3}{2*L2}\right)$ and wherein $\alpha_1 < \alpha_2$.

In some embodiments, the graphitization furnace may be a continuous graphitization furnace or a semi-batch graphitization furnace, and in particular a continuous graphitization furnace.

In some embodiments, the first angle $\alpha_1$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1° to about 45°, more specifically between about 0.2° and 20° and in particular between about 0.3° to about 10°.

In some embodiments, it may be particularly advantageous that the first angle $\alpha_1$ may be less than 20°, 15°, 10°, 9°, 8°, 7°, 6°, 5°, 4°, 3°, 2° or 1°, in particular the first angle $\alpha_1$ may be between about 0.1° to about 20°, more specifically between about 0.2° and 10° and in particular between about 0.3° to about 5°.

In some embodiments, the first angle $\alpha_1$ may be between about 0.1° to about 5°, more specifically between about 0.1° to about 2° and in particular between about 0.1° to about 1.5°.

In some embodiments, the first angle $\alpha_1$ may be between about 0.1° to about 5°, more specifically between about 0.2° to about 2° and in particular between about 0.3° to about 1.5°.

In some embodiments, the second angle $\alpha_2$ may be less than 45°, 35°, 30°, 20°, 15°, 10°, 9°, 8°, 7°, 6°, 5°, 4°, 3°, 2° or 1°.

In some embodiments, the second angle $\alpha_2$ may be between about 0.1° to about 45°, more specifically between about 0.2° and 20° and in particular between about 0.3° to about 10°.

In some embodiments, it may be particularly advantageous that the second angle $\alpha_2$ may be less than 20°, 15°, 10°, 9°, 8°, 7°, 6°, 5°, 4°, 3°, 2° or 1°, in particular the second angle $\alpha_2$ may be between about 0.1° to about 20°, more specifically between about 0.2° and 10° and in particular between about 0.3° to about 5°.

In some embodiments, the second angle $\alpha_2$ may be between about 0.1° to about 5°, more specifically between about 0.1° to about 2° and in particular between about 0.1° to about 1.5°.

In some embodiments, the second angle $\alpha_2$ may be between about 0.1° to about 5°, more specifically between about 0.2° to about 2° and in particular between about 0.3° to about 1.5°.

In some embodiments, the first angle $\alpha_1$ may be less than 45°, 35°, 30°, 20°, 15°, 10°, 9°, 8°, 7°, 6°, 5°, 4°, 3°, 2° or 1°; and the second angle $\alpha_2$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1° to about 45°, more specifically between about 0.2° and 20° and in particular between about 0.3° to about 10°; and the second angle $\alpha_2$ may be between about 0.1° to about 45°, more specifically between about 0.2° and 20° and in particular between about 0.3° to about 10°.

In some embodiments, it may be particularly advantageous that the first angle $\alpha_1$ may be less than 20°, 15°, 10°, 9°, 8°, 7°, 6°, 5°, 4°, 3°, 2° or 1°, in particular the first angle $\alpha_1$ may be between about 0.1° to about 20°, more specifically between about 0.2° and 10° and in particular between about 0.3° to about 5°; and the second angle $\alpha_2$ may be less than 20°, 15°, 10°, 9°, 8°, 7°, 6°, 5°, 4°, 3°, 2° or 1°, in particular the second angle $\alpha_2$ may be between about 0.1° to about 20°, more specifically between about 0.2° and 10° and in particular between about 0.3° to about 5°.

In some embodiments, the first angle $\alpha_1$ may be between about 0.1° to about 5°, more specifically between about 0.1° to about 2° and in particular between about 0.1° to about 1.5°; and the second angle $\alpha_2$ may be between

about 0.1° to about 5°, more specifically between about 0.1° to about 2° and in particular between about 0.1° to about 1.5°.

In some embodiments, the first angle $\alpha_1$ may be between about 0.1° to about 5°, more specifically between about 0.2° to about 2° and in particular between about 0.3° to about 1.5°; and the second angle $\alpha_2$ may be between about 0.1° to about 5°, more specifically between about 0.2° to about 2° and in particular between about 0.3° to about 1.5°.

In some embodiments, the first angle $\alpha_1$ may be between about 0.1° to about 5°, more specifically between about 0.2° to about 2° and in particular between about 0.3° to about 1.5°; and the second angle $\alpha_2$ may be between about 0.1° to about 5°, more specifically between about 0.2° to about 2° and in particular between about 0.3° to about 1.5°.

In some embodiments, the second cross-sectional area is the third cross-sectional area.

In some embodiments, the graphitization furnace may be a continuous graphitization furnace or a semi-batch graphitization furnace, and in particular a continuous graphitization furnace.

In some embodiments, the graphitization furnace may be configured such that material flow in the graphitization furnace may be gravity assisted.

In some embodiments, the graphitization furnace may comprise an isolation structure surrounding the channel.

In some embodiments, the wall thickness of the channel may be between about 5 mm to about 200 mm.

In some embodiments, the graphitization furnace may be a continuous graphitization furnace or a semi-batch graphitization furnace, and in particular continuous graphitization furnace.

In some embodiments, the graphitization furnace may be configured such that material flow in the graphitization furnace is gravity assisted.

In some embodiments, the channel may comprise or consists of graphite, in particular wherein the plurality of plate-shaped wall segments may comprise or consists of graphite.

In some embodiments, at least one plate-shaped wall segment may comprise a high-temperature-resistant hard coating.

In some embodiments, at least two plate-shaped wall segments of the plurality of plate-shaped wall segments may be connected by at least one joint, in particular at least one detachable joint.

In some embodiments, the at least one joint may comprise a bolt, a split pin and/or locket pins.

In some embodiments, the at least one joint may comprise a dowel joint, a mitre joint, a cross dowel joint or a dovetail joint.

In some embodiments, the at least one joint may comprise a screw, more specifically a carbonaceous screw, and in particular a screw comprising graphite or carbon fiber reinforced carbon (CFRC).

In some embodiments, the at least one joint may comprise a clamp.

In some embodiments, the plurality of plate-shaped wall segments may be joined by wrapping, in particular by wrapping with graphite fibers and/or carbon fibers.

In some embodiments, the at least one joint may be sealed.

In some embodiments, the joint may be sealed with a sealing means comprising pitch, resins, carbon, graphite, graphite mats, graphite foil, expanded graphite, carbon mats, carbon felts and/or graphite felts, carbon fibers, CFRC.

In some embodiments, at least one wall segment of the plurality of plate-shaped wall segments may be gas-permeable.

In some embodiments, a first plate-shaped wall segment may be gas-permeable and a second plate-shaped wall segment may be gas-impermeable.

In a second aspect, the present disclosure relates to a method of using a graphitization furnace according to any preceding embodiment for preparing graphite from carbonaceous material.

**Brief Description of the Figures**

**Figure 1** shows an exemplary schematic cross-section of a graphitization furnace 100 according to the first aspect.

**Figure 2** shows an exemplary schematic isometric view of a channel 110 comprising a plurality of plate-shaped wall segments 140.

**Figure 3** shows an exemplary schematic cross-section of a graphitization furnace 100 comprising a downstream section 130 disposed at a greater angle relative to the central-channel-axis 200.

**Figure 4** shows an exemplary schematic isometric view of a graphitization furnace 100 comprising a downstream section 130 disposed at a greater angle relative to the central-channel-axis 200.

**Detailed Description**

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

As mentioned above, artificial graphite may be produced by heating carbonaceous starting materials, to temperatures of about 3000 °C under exclusion of oxygen. The heating may be performed in a continuous oven wherein the carbonaceous material may move within a heated channel between a raw material inlet and a product outlet. The carbonaceous material may transition to graphite while being conveyed. The movement may be for example realized using screw conveyers or pushers. Alternatively or additionally, the driving force may be gravity-based, for example in a vertical graphitization furnace.

As stated above, artificial graphite may be produced by heating carbonaceous starting materials, such as coke and/or pitch, to temperatures of about 3000 °C under exclusion of oxygen. The starting material typically comprises non-crystalline graphitizable carbon, which is transformed to graphite, due to the heat. An important property of graphite is its degree of crystallinity. A higher crystallinity may result for example in a higher maximal capacity when used in a battery.

The term "graphite" is well known and attributed its common meaning in the art. More specifically, the term "graphite" may refer to a material comprising crystalline carbon in a hexagonal structure. Alternatively or additionally, the term "graphite" may refer to a material comprising at least about 60 %, more specifically at least about 80 % and in particular at least about 83 % crystalline carbon in a hexagonal structure. Alternatively or additionally, the term "graphite" may refer to a material with a graphitization degree of at least about 46 %, more specifically 69 %, even more specifically at least about 80 % and in particular at least about 83 %.

The crystallinity of a graphite may be described via its graphitization degree which may be measured by X-ray diffraction (XRD). The crystalline carbon in the graphite forms a plurality of honeycomb lattices in a sheet-like manner (stacked graphene sheets). The distance between the plurality of honeycomb lattices is described by the parameter "interplane distance" $d_{002}$ which describes the distance between every second graphene sheet in the graphite and which gives a typical signal in XRD. XRD may be used to measure the interplane distance $d_{002}$ between the plurality of lattices. An interplane distance $d_{002}$ of 0.3440 nm corresponds to the interplane distance ofturbostratic graphite and an interplane distance of 0.3354 nm corresponds to the interplane distance in a perfect graphite crystal.

The interplane distance may be used to calculate the graphitization degree by the following formula:

$$Graphitization\ Degree = \frac{0.3440nm - d_{002}}{0.3440nm - 0.3354nm}$$

A higher graphitization degree may correspond to a higher maximum discharge capacity, with ideal graphite having a graphitization degree of 1.

Heat treatment of the carbonaceous material may be performed in a continuous furnace, i.e. a furnace which is configured for a continuous or semi-continuous production of graphite. For example, carbonaceous raw material may be conveyed along a channel between a raw material inlet and a product outlet, while being heated. The carbonaceous raw material may be in any form, for instance in powder form or granulated, more specifically in powder form.

However, it has been found that the carbonaceous material may cake in sections of the channel. In particular, the caking may occur in sections closer to the product outlet. The channel may be arranged vertically between a material inlet at the top and an outlet at the bottom. As a result, the carbonaceous material may form a material column, wherein the carbonaceous material at the bottom of the material column, e.g. close to the product outlet, is compressed by the carbonaceous material disposed above it. The compression may significantly increase the material's propensity for caking.

This caking may also result in a reduced flowability of the carbonaceous material which may result in an impaired material flow. In particular the reduced flowability may result in an impeded discharge of the carbonaceous material from the product outlet. Additionally, the caking and/or reduced flowability may lead to inhomogeneities in the conveyed carbonaceous material. For example, the caking and/or reduced flowability may lead to an inhomogeneous temperature distribution in the carbonaceous material disposed in the graphitization furnace. These inhomogeneities may, in turn, result in a reduced product quality, e.g. a reduced degree of graphitization or inhomogeneous degree of graphitization. Furthermore, the caking may also lead to the product discharged from the graphitization furnace to comprise agglomerates, which may reduce the product quality or require post-processing to break-up the agglomerates.

It has been found that the transport of carbonaceous material prone to caking may be improved by providing a channel section with a diameter increasing in the material transport direction. The product obtainable from such a furnace may be endowed with superior product quality, rendering it particularly suitable for use as anode material, in particular anode material for lithium batteries.

However, milling or machining such a widening channel from a graphite block may result in a lot of cut-off. Further, when using graphite blocks milling may be difficult and time-consuming to create a stepless wall. Constructing wall segments angled radially outwards may be more efficiently done using plate-shaped wall segments.

Accordingly, the present disclosure relates to a graphitization furnace 100 configured to graphitize particulate carbonaceous material comprising a raw material inlet 160 and a product outlet 170, and a channel 110 connecting the raw material inlet 160 and the product outlet 170. The channel 110 comprises an upstream section 120 and a downstream section 130. The upstream section 120 has a first cross-sectional area closer to the raw material inlet 160 and a second cross-sectional area closer to the product outlet 170, wherein the second cross-sectional area is larger than the first cross-sectional area. The upstream section 120 and/or the downstream section 130 comprises a plurality of plate-shaped wall segments 140, 150 and the upstream section 120 and/or the downstream section 130 has a polygonal cross-sectional shape.

The terms upstream and downstream as used herein have their typical meaning in the art, wherein upstream refers to a section closer to the raw material inlet and downstream referring to a section closer to the product outlet.

Here and elsewhere, the term "wall section" refers to a part of channel's 100 wall, more specifically to a part of the wall with a length of at least 5 cm, more specifically at least 10 cm. In particular the term "wall section" may refer to a part of wall with a length of at least 5 cm, in particular at least 10 cm, and a width of at least 10 cm. The width and length may also be measured along a curved wall segment, along the curved surface. For example, a wall section may be one side of the downstream section 130, e.g. one plate-shaped wall segment 140.

The term "particulate material" is well-known and i.a. (inter alia) attributed its common meaning in the art. Additionally or alternatively, the term "particulate material" may refer to discrete particles, wherein the particles have size, e.g. mean diameter, of at least 1 $\mu$m. Additionally or alternatively, the term "particulate material" may refer to discrete, optionally granulated, particles, wherein the particles have mean size of at least about 3 $\mu$m and up to about 25 cm.

The term "carbonaceous material" is well-known and i.a. attributed its common meaning in the art. Additionally or alternatively, the term "carbonaceous material" may refer to a material comprising carbon. More specifically, the term "carbonaceous material" may refer to a material comprising at least 20 wt.-%, more specifically at least 40 wt.-% and in particular at least 60 wt.-% of carbon, relative to the total weight of the material.

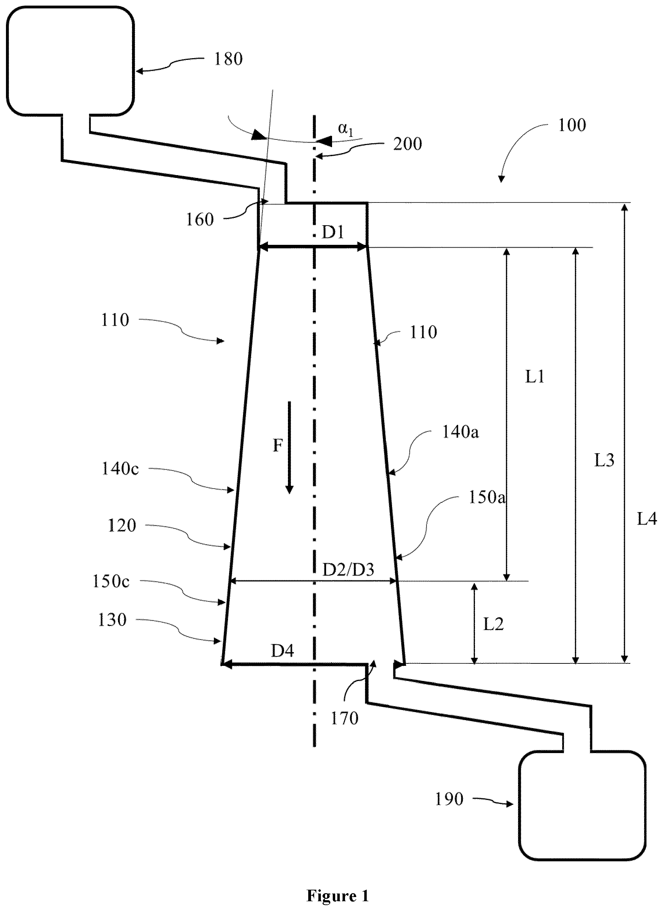

Figure 1 shows an exemplary schematic cross-section of a graphitization furnace 100 according to the first aspect. The channel 110 is arranged between a raw material inlet 160 and a product outlet 170 along a central-channel-axis 200. The orientation of the central-channel-axis 200 may correspond to the material flow direction F. Further, the channel 110 comprises an upstream section 120 and a downstream section 130 arranged along a central-channel-axis 200. Carbonaceous material is supplied to channel 110 via the raw material inlet 160 and converted to graphite while passing through channel 110. Graphite is then discharged through the product outlet 170. In some embodiments, the raw material inlet 160 may be connected to a hopper 180 comprising carbonaceous raw material. In some embodiments, the product outlet 170 may be connected to a collecting tank 190 or a cooling device. Figure 1 further depicts that the upstream section 120 has a first cross-sectional area closer to the raw material inlet 160 and a second cross-sectional area closer to the product outlet 170, wherein the second cross-sectional area is larger than the first cross-sectional area. As depicted in Figure 1, in some embodiments, the downstream section 130 may have a fourth cross-sectional area closer to a product outlet 170 than a third cross-sectional area, wherein the fourth cross-sectional area is greater than the third cross-sectional area. In some embodiments, the upstream section 120 and the downstream section 130 are spaced apart or adjoining, in particular adjoining. Hence the downstream section 130 and the upstream section 120 may be directly connected, as depicted in Figure 1. When the upstream section 120 and the downstream section 130 are adjoining the second cross-sectional area may be the same as the third cross-sectional area. As depicted in Figure 1, the channel 110 may have a first inner diameter D1 in the plane of the first cross-sectional area. Accordingly, the channel 110 may have a second D2, third D3 and fourth D4 inner diameter in the plane of the second, third and fourth cross-sectional area respectively.

The skilled person knows how to determine a diameter, but in case of doubt, the diameter should refer to the maximum diameter in a plane. For example, in the case of a square cross-section, the diagonal length in the cross-sectional area's plane may be regarded as the respective diameter of the square.

As depicted in Figure 1, the upstream section 120 may have a first length L1 parallel to the central-channel-axis 200. Alternatively, the first length L1 may be the length between the first cross-sectional area and the second cross-sectional area parallel to the central-channel-axis 200. The downstream section 130 may have a second length L2 parallel to the central-channel-axis 200. The length L2 may be measured between the third cross-sectional area and the fourth cross-sectional area.

Further, the upstream section 120 and the downstream section 130 may have an aggregate third length L3 parallel to the central-channel-axis 200. Alternatively, the length L3 may be the length between the first cross-sectional area and the fourth cross-sectional area parallel to the central-channel-axis 200.

The method of measuring L1, L2 and L3 is not particularly limited. For instance, the first length may be determined by measuring the length of the central-channel-axis between the first cross-sectional area and the second cross-sectional area. Alternatively, the first length L1 may be determined by measuring the distance between the geometric center of the first cross-sectional area and the second cross-sectional area. Analogously, the second length L2 may be determined by measuring the distance between the geometric center of the third cross-sectional area and the fourth cross-sectional area and the third length L3 by measuring the distance between the geometric center of the first cross-sectional area and the fourth cross-sectional area. Alternatively, L1 and L2 may be determined on basis of a cross-section of the channel. In this case, the distance from the intersections of the central-channel-axis 200 with the third and fourth cross-sectional area represents L2 and the distance of the intersections of the central-channel-axis with the first and second cross-sectional area represents L1. Analogously, the third length L3 may be the distance from the intersections of the central-channel-axis with the first and fourth cross-sectional area.

Moreover, the central-channel-axis 200 is not necessarily straight. For example, if the channel 110 is curved, the central-channel-axis 200 may also be curved. In this case, L1 and L2 may be measured by determining the geometric centers of a plurality of cross-sectional areas along the channel 110 and summing up the individual distances between the geometric centers being disposed within the upstream and downstream section 130, respectively.

The widening of the cross-sectional area of the channel 110 may also be defined by an angle between central-channel-axis 200 and the inner side of the upstream section 120. A first angle $\alpha_1$ may be defined as

$$\alpha_1 = \arctan\left(\frac{D2-D1}{L1}\right)$$

. Accordingly, in some embodiments, the channel has a first angle $\alpha_1$ defined as meeting the criterion:

$$\alpha_1 = \arctan\left(\frac{D2-D1}{2*(L1-L2)}\right)$$

. The first angle $\alpha_1$ is depicted in Figure 1.

In some embodiments, the first angle $\alpha_1$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1° to about 45°, more specifically between about 0.2° and 20° and in particular between about 0.3° to about 10°.

In some embodiments, it may be particularly advantageous that the first angle $\alpha_1$ may be less than 20°, 15°, 10°, 9°, 8°, 7°, 6°, 5°, 4°, 3°, 2° or 1°, in particular the first angle $\alpha_1$ may be between about 0.1° to about 20°, more specifically between about 0.2° and 10° and in particular between about 0.3° to about 5°.

As mentioned above, it has been found that the transport of carbonaceous material prone to caking may be improved by providing a channel section with a diameter increasing in the material transport direction and an additional channel section wherein the diameter increases even further. However, the increase in diameter also results in an increased space requirement for the graphitization furnace. After diligent research, it has been found, that in general, if the angles $\alpha_1$ and $\alpha_2$ are below 10° but above 0.1°, a sufficient material flow can still be ensured. In particular, if the angles $\alpha_1$ and $\alpha_2$ are between about 0.1° and 5° the material flow may still be sufficient while at the same time resulting in minimal space requirements.

In some embodiments, the first angle $\alpha_1$ may be between about 0.1° to about 5°, more specifically between about 0.1° to about 2° and in particular between about 0.1° to about 1.5°.

In some embodiments, the first angle $\alpha_1$ may be between about 0.1° to about 5°, more specifically between about 0.2° to about 2° and in particular between about 0.3° to about 1.5°.

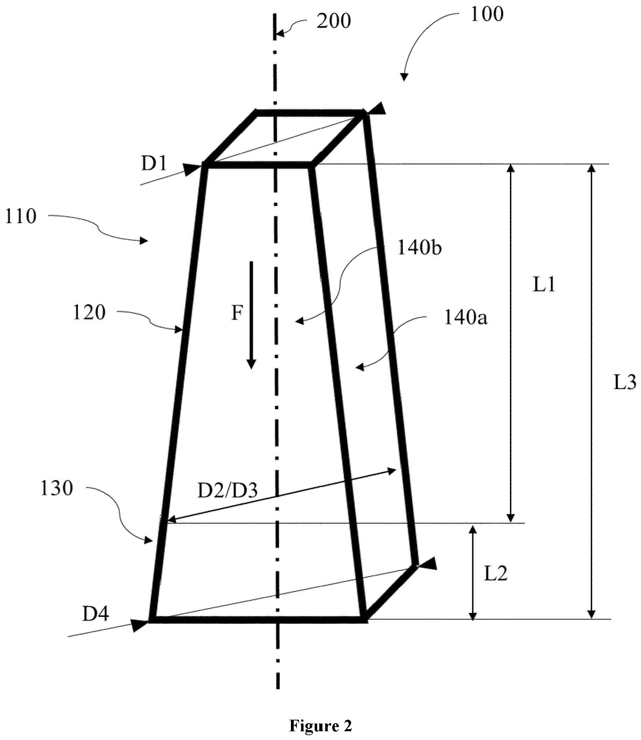

Figure 2 shows an exemplary schematic isometric view of a channel 110 comprising a plurality of plate-shaped wall segments 140. The channel 110 exhibits a rectangular cross-section. The upstream section 120 and the downstream section 130 each consist of four plate-shaped wall segments 140 of which two plate-shaped wall segments 140a, 140b are visible.

In some embodiments, the cross-sectional shape may be polygonal with n corners, wherein n is an integer between 3 and 12. More specifically, the cross-sectional shape may be triangular, rectangular, square, or hexahedral, and in particular rectangular. The cross-sectional shape may be the inner perimeter of the channel 110 cross-section perpendicular to the central-channel-axis 200. In some embodiments, the cross-sectional shape may be formed by the plurality of plate-shaped wall segments 140. A square or rectangular cross-sectional shape may allow for facilitated construction, for example, as joints can be formed where two plate-shaped wall segments 140 about orthogonally. A rectangular shape may be advantageous (in particular in comparison to a square shape) in that the distances that volatile impurities (ash) liberated during graphitization have to travel to reach the nearest wall is reduced. Further, a rectangular shape may be advantageous as it may provide a high surface-to-volume ratio, which may increase the rate of heat transfer from the channel to the carbonaceous material. On the other hand, a hexagonal cross-section may provide a low surface-to-volume ratio and a high-stability. As heat transfer is generally proportional to an objects surface area, the furnace exhibiting a low surface-to-volume ratio may lead to a higher thermal efficiency. A higher thermal efficiency in turn may result in a higher energy efficiency of the high temperature process graphitization. Furthermore, the graphitization furnace 100 may comprise additional structures. In some embodiments, the (vertical) graphitization furnace 100 may comprise an isolation structure surrounding the channel 110. For overview purposes the isolation structure encasing the channel 110 is not depicted. As the isolation structure encases the channel 110, the surface-to-volume ratio of the aggregate of isolation structure and channel 110 would usually also be smaller for a hexagon compared to a triangular or rectangular cross-sectional shape.

In some embodiments, at least one plate-shaped wall segment 140 of the plurality of plate-shaped wall segments 140 of the channel is angled radially outward relative to the central-channel-axis 200. In a channel 110 having a rectangular or square cross-section (perpendicular to the central-channel-axis 200), not all wall sections of the channel 110 need to be angled radially outward (in the material flow direction F and relative to the central-channel-axis 200), to achieve a widening cross-sectional area. For example, as depicted in Figure 2, the channel 110 may comprise two wall segments which are aligned parallel to the central-channel-axis 200 and two wall segments disposed at an angle relative to the central-channel-axis 200.

In some embodiments, the graphitization furnace 100 may be configured such that material flow in the graphitization furnace 100 is gravity assisted. While the material flow may be gravity assisted, the graphitization furnace 100, in particular the channel 110, may include conveying means, for example to control the rate of material flow and/or discharge from the product outlet 170. In some embodiments, the graphitization furnace 100 may be a vertical graphitization furnace 100. In a gravity assisted graphitization furnace 100, in particular a vertical graphitization furnace 100 comprising a raw material inlet 160 towards the top and a product outlet 170 towards the bottom, gravity may be a primary driver of movement for the particulate carbonaceous material. Accordingly, the cross-sectional area increasing in the downstream direction may be crucial for improving the material flow. In particular, a material column may form in a vertical graphitization furnace 100 which may increase the pressure on the particulate carbonaceous material downstream towards the product outlet 170. The increased pressure may impair the material flow and increase the risk of caking. Therefore, in a vertical graphitization furnace 100 an increasing cross-sectional area in downstream direction may be in particular beneficial.

In some embodiments, the graphitization furnace 100 may be a continuous graphitization furnace 100 or a semi-batch graphitization furnace 100, and in particular continuous graphitization furnace 100. In some embodiments, a continuous graphitization furnace 100 a continuous material flow rate may be of high importance to ensure consistent product quality, in particular as otherwise parts of the particulate carbonaceous material may have a higher or lower residence time, which may lead to a different graphitization degree.

As mentioned above, in particular in the section disposed closest to the product outlet 170, e.g. in the downstream section 130, the risk of caking may be the highest, in particular in a vertical graphitization furnace 100, wherein the carbonaceous material forms a material column. As previously described, in the section closest to the product outlet 170 the carbonaceous material's temperature may be the lowest and the compressive force of the material column may be the highest. Furthermore, a conveying means may be disposed close to the product outlet 170 which may introduce further forces to the carbonaceous material, which may further increase the risk of caking.

It has been found that the transport of carbonaceous material prone to caking may be improved by providing a channel section with a diameter increasing in the material transport direction and an additional channel section wherein the diameter increases even further. Accordingly, the downstream section 130 may be disposed at a greater angle (or greater radially outward inclination) relative to the central-channel-axis 200 compared to the upstream section 120. The geometry of the downstream section 130 disposed at a greater angle compared to the upstream section 120 relative to the central-channel-axis 200 may be also described by a second angle $\alpha_2$. The second angle $\alpha_2$ may be defined as

$$\alpha_2 = \arctan\left(\frac{D4-D3}{2*L2}\right)$$

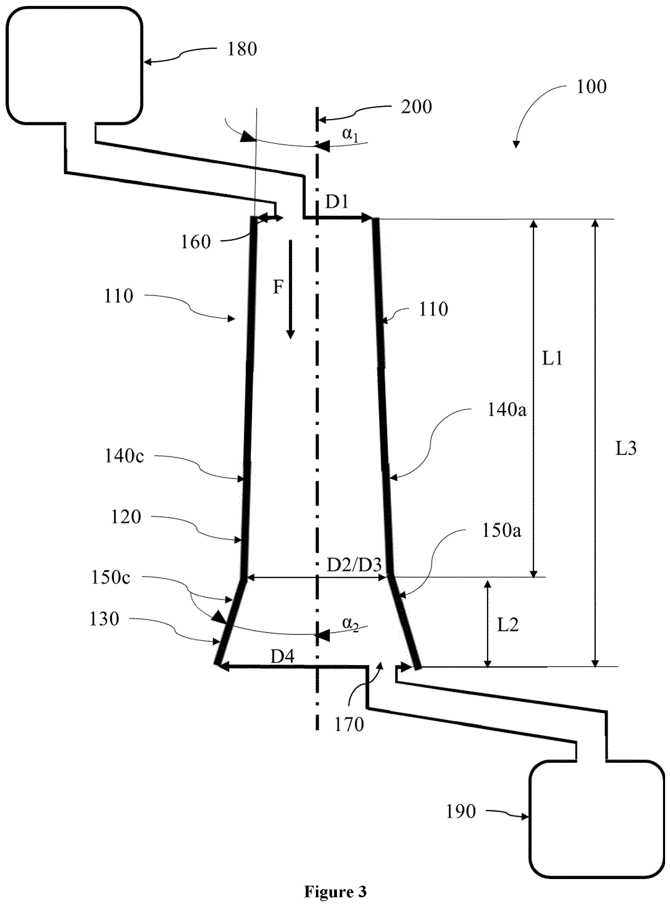

. Accordingly, in some embodiments, the channel may have a second angle $\alpha_2$ defined as meeting the criterion: $\alpha_2 = \arctan\left(\frac{D4-D3}{2*L2}\right)$ , in particular wherein the second angle $\alpha_2$ is greater than the first angle $\alpha_1$. Accordingly, in some embodiments, $\frac{(D4-D3)}{L2}$ may be greater than $\frac{D2-D1}{L1}$ and $\alpha_2$ may be greater than $\alpha_1$. The first angle $\alpha_1$ and the second angle $\alpha_2$ are depicted Figure 3.

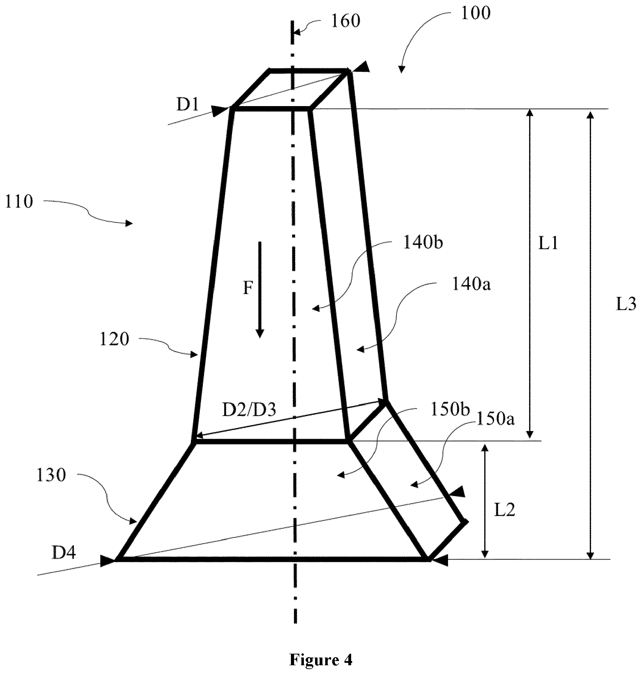

Figure 3 shows an exemplary schematic cross-section of a graphitization furnace 100 comprising a downstream section 130 disposed at a greater angle relative to the central-channel-axis 200 compared to the upstream section 120. Further, Figure 4 shows an exemplary schematic isometric view of a graphitization furnace 100 comprising a downstream section 130 disposed at a greater angle relative to the central-channel-axis 200 compared to the upstream section 120. In particular, in Figure 3 and Figure 4, the downstream section's 130 plurality of plate-shaped wall segments 150 is disposed at a greater angle relative to the central-channel-axis 200 compared to the upstream section's 120 plurality of plate-shaped wall segments 140.

In some embodiments, the second angle $\alpha_2$ may be less than 45°, 35°, 30°, 20°, 15°, 10°, 9°, 8°, 7°, 6°, 5°, 4°, 3°, 2° or 1°.

In some embodiments, the second angle $\alpha_2$ may be between about 0.1° to about 45°, more specifically between about 0.2°and 20° and in particular between about 0.3° to about 10°.

In some embodiments, it may be particularly advantageous that the second angle $\alpha_2$ may be less than 20°, 15°, 10°, 9°, 8°, 7°, 6°, 5°, 4°, 3°, 2° or 1°, in particular the second angle $\alpha_2$ may be between about 0.1° to about 20°, more specifically between about 0.2°and 10° and in particular between about 0.3° to about 5°.

In some embodiments, the second angle $\alpha_2$ may be between about 0.1° to about 5°, more specifically between about 0.1° to about 2° and in particular between about 0.1° to about 1.5°.

In some embodiments, the second angle $\alpha_2$ may be between about 0.1° to about 5°, more specifically between about 0.2° to about 2° and in particular between about 0.3° to about 1.5°.

In some embodiments, the first angle $\alpha_1$ may be less than 45°, 35°, 30°, 20°, 15°, 10°, 9°, 8°, 7°, 6°, 5°, 4°, 3°, 2° or 1°; and the second angle $\alpha_2$ may be less than 45°, 35°, 30°, 20°, 15°, 10°, 9°, 8°, 7°, 6°, 5°, 4°, 3°, 2° or 1°.

In some embodiments, the first angle $\alpha_1$ may be between about 0.1° to about 45°, more specifically between about 0.2°and 20° and in particular between about 0.3° to about 10°; and the second angle $\alpha_2$ may be between about 0.1° to about 45°, more specifically between about 0.2°and 20° and in particular between about 0.3° to about 10°.

In some embodiments, it may be particularly advantageous that the first angle $\alpha_1$ may be less than 20°, 15°, 10°, 9°, 8°, 7°, 6°, 5°, 4°, 3°, 2° or 1°, in particular the first angle $\alpha_1$ may be between about 0.1° to about 20°, more specifically between about 0.2°and 10° and in particular between about 0.3° to about 5°; and the second angle $\alpha_2$ may be less than 20°, 15°, 10°, 9°, 8°, 7°, 6°, 5°, 4°, 3°, 2° or 1°, in particular the second angle $\alpha_2$ may be between about 0.1° to about 20°, more specifically between about 0.2°and 10° and in particular between about 0.3° to about 5°.

In some embodiments, the first angle $\alpha_1$ may be between about 0.1° to about 5°, more specifically between about 0.1° to about 2° and in particular between about 0.1° to about 1.5°; and the second angle $\alpha_2$ may be between about 0.1° to about 5°, more specifically between about 0.1° to about 2° and in particular between about 0.1° to about 1.5°.

In some embodiments, the first angle $\alpha_1$ may be between about 0.1° to about 5°, more specifically between about 0.2° to about 2° and in particular between about 0.3° to about 1.5°; and the second angle $\alpha_2$ may be between about 0.1° to about 5°, more specifically between about 0.2° to about 2° and in particular between about 0.3° to about 1.5°.

In some embodiments, the first angle $\alpha_1$ may be between about 0.1° to about 5°, more specifically between about 0.2° to about 2° and in particular between about 0.3° to about 1.5°; and the second angle $\alpha_2$ may be between about 0.1° to about 5°, more specifically between about 0.2° to about 2° and in particular between about 0.3° to about 1.5°.

In some embodiments, the second cross-sectional area is the third cross-sectional area.

In some embodiments, the channel 110 may comprise a heating zone, a high temperature reaction zone and a cooling zone. The heating zone may be characterized by the temperature of the carbonaceous material increasing in flow direction when the graphitization furnace 100 is used. The high temperature reaction zone may be characterized by the carbonaceous material having a temperature of at least 80% of the maximum temperature achieved in the graphitization furnace 100. The cooling zone may be characterized by the temperature of the carbonaceous material decreasing in flow direction when the graphitization furnace 100 is used. The downstream section 130 may be disposed in the high temperature reaction zone and/or the cooling zone, in particular the cooling zone. As mentioned above, the carbonaceous material may be in particular prone to caking where the pressure on the carbonaceous material is the highest. As the cooling zone is typically arranged the lowest in a vertical graphitization oven increasing diameter of the downstream section 130 may be in particular expedient in the cooling zone to prevent caking.

In some embodiments, the graphitization furnace may be a vertical graphitization furnace. In some embodiments, the graphitization furnace may be a vertical graphitization furnace and the downstream section may be provided in the lower third, the lower fourth, the lower fifth or the lower sixth of the channel, more specifically the lower fifth or lower sixth of the channel, and in particular in the lower fifth of the channel, wherein lower means closer to the gravitational center of the earth. In some embodiments, the graphitization furnace is a vertical graphitization furnace and the upstream section may be provided in the lower half, the lower third, the lower fourth or the lower fifth of the channel, more specifically the lower fifth or lower sixth of the channel, and in particular in the lower fifth of the channel, wherein lower means closer to the gravitational center of the earth.

In some embodiments, the graphitization furnace may be a vertical graphitization furnace and the downstream section may be provided in the lower third, the lower fourth, the lower fifth or the lower sixth of the channel, more specifically the lower fifth or lower sixth of the channel, and in particular in the lower fifth of the channel; and the upstream section may be provided in the lower half, the lower third, the lower fourth or the lower fifth of the channel, more specifically the lower fifth or lower sixth of the channel, and in particular in the lower fifth of the channel, wherein lower means closer to the gravitational center of the earth.

Therefore, the widening of the channel 110 may be limited to its lower end.

Furthermore, in some embodiments, the ratio of L2/L3 may be smaller than 0.5, more specifically smaller than 0.3 and in particular smaller than 0.2. Additionally or alternatively, the ratio of L2/L3 may be between about 0.03 to about 0.5, more specifically 0.05 to about 0.3 and in particular between about 0.1 to about 0.2. Hence, the length of the downstream section 130 may be significantly shorter compared to that of the upstream section 120. While the significant widening of the downstream section 130 may improve the flowability, the increased diameter may result in an increased space requirement of the graphitization furnace 100 in general for a downstream section 130 of high length.

In some embodiments, between the upstream section 120 and the downstream section 130 an edge-like or arched transition feature may be disposed. Such transition features may be an (abrupt or gradual) change in the cross-sectional diameters of the upstream section 120 to the downstream section 130 and can be provided for a variety of purposes, such as constructive needs or reducing the chance of material agglomerating at the junction of the upstream section 120 and the downstream section 130. The structure of the transition features is not particularly limited and it can be as simple as an edge or a curved widening of the channel 110.

Furthermore, the extent of the cross-sectional area may not decline between the first cross-sectional area and the second cross-sectional area and/or between the third cross-sectional area and the fourth cross-sectional area. Accordingly, the upstream section 120 and/or downstream section 130 may not be tapered in the material flow direction F. In some embodiments, the cross-sectional area may always increase between the first cross-sectional area and the fourth cross-sectional area.

As mentioned above, the channel 110 may comprise or consist of graphite. More specifically, the plurality of plate-shaped wall segments 140, 150 may comprise or consist of graphite. In some embodiments, the wall thickness of the channel 110 may be between about 5 mm to about 200 mm. Graphite may be highly heat-resistant. Additionally, the graphite may be used as a heating element.

Additionally, graphite may be used as a heating element. For example, a current may be applied to a section of the channel 100 comprising or consisting of graphite. The current, or electrical energy, may then be converted to thermal energy. The channel 100 itself may therefore heat the carbonaceous material disposed therein. Alternatively, graphite may be used as an electrode to apply a current to the carbonaceous material. Accordingly, in some embodiments, at least a portion of a channel 110 comprising or consisting of graphite may be a heating element or electrode.

In the following, provisions for joining plate-shaped wall segments 140 are discussed.

In some embodiments, at least two plate-shaped wall segments 140, 150 of the plurality of plate-shaped wall segments 140, 150 may be connected by at least one joint, in particular at least one detachable j oint. The at least one detachable joint may allow removing and replacing individual plate-shaped wall segments 140, 150 from the channel 110. For example, the plate-shaped wall segments 140 may be subject to significant abrasion, e.g. due to the carbonaceous material moving within the channel. In particular, due to the increased pressure, the abrasion rate may be high in the downstream section 130. When a plate-shaped wall segment 140 has been abraded it may be replaced by detaching the plate-shaped wall segment 140 when using a detachable joint. Additionally or alternatively, in some embodiments, at least one plate-shaped wall segment 140 may comprise a high-temperature-resistant hard coating. For example, tantalum carbide and tantalum hafnium carbide are hard ceramics exhibiting melting points above 3800 °C. However, given the temperatures and that some contaminants are present in the ash, e.g. halogenides or sulfur may attack the hard coatings, the plate-shaped wall segments may require being recoated after some time, which may be facilitated using at least one detachable joint.

In some embodiments, the at least one joint may comprise a bolt, a split pin and/or locket pins.

In some embodiments, the at least one joint may comprise a dowel joint, a mitre joint, a cross dowel joint or a dovetail joint.

In some embodiments, the plate-shaped wall segments 140, 150 may comprise one or more protrusions. In some embodiments, the one or more protrusions may extend from the areal expansion of the plate-shaped wall segments 140, 150, in particular perpendicular to the areal expansion. In other words, the one or more protrusions may have an extension in the direction in which the thickness of the plate-shaped wall segments 140, 150 would be measured. In some embodiments, the extension of the one or more protrusions perpendicular to the areal expansion of the plate-shaped wall segments 140, 150 may be less than 50%, more specifically less than 35% and in particular less than 25% of the thickness of the plate-shaped wall segment 140, 150 from which the protrusion extends.

In some embodiments, the at least one joint may comprise a screw, more specifically a carbonaceous screw or bolt, and in particular a screw or bolt comprising graphite or carbon fiber reinforced carbon (CFRC). For example, a mitre joint may be held together by a carbonaceous screw, which may be removed to allow disconnecting the at least two plate-shaped wall segments 140. The thread for the screw may be disposed in one of the at least one plate-shaped wall segments 140 being connected. The bolt may be used in conjunction with a nut, more specifically a carbonaceous nut comprising or consisting of graphite and/or CFRC.

In some embodiments, the screw or bolt may comprise at least about 90 wt.-% CFRC and in particular wherein the carbonaceous substrate may comprise at least about 99 wt.-% CFRC, relative to the total weight of the carbonaceous screw. The term "CFRC" is well known and attributed its common meaning in the art. More specifically, the term "CFRC" may refer to a composite material comprising carbon fibers in a matrix of carbon. In particular, the term "CFRC" may refer to a composite material consisting of carbon fibers in a matrix of carbon.

In some embodiments, the at least one joint may comprise a clamp. The clamp may also comprise or consist of graphite. In some embodiments, the plurality of plate-shaped wall segments 140, 150 may be joined by wrapping, in particular by wrapping with graphite fibers and/or carbon fibers. The clamp or wrapping may press the plurality of plate-shaped wall segments 140, 150 together to join them. The clamp or wrapping may be used in addition to other types of joints, such as box joints or dovetail joints. Clamping and/or wrapping may be in particular used to connect plate-shaped wall segments 140 on the same level, e.g. clamping and/or wrapping may be used to join all plate-shaped wall segments 140 in the downstream section 130, whereas for example a dovetail joint may be used to join the downstream section 130 to the upstream section 120.

In some embodiments, the at least one joint may be sealed. For example, the joint may be sealed to prevent the particulate carbonaceous material from exiting the channel 110. Further, the sealing may aid in guiding the flow inert gas and/or purge gases, and thereby ash in the channel 110. In some embodiments, the at least one joint may be sealed with a sealing means. In some embodiments, the sealing means may comprise pitch or a resin. The pitch may be carbonized or may be carbonized and graphitized during use of the graphitization furnace 100. Additionally or alternatively, in some embodiments, the sealing means may comprise graphite mats, graphite foil, expanded graphite or carbon mats, e.g. carbon fiber mats. In some embodiments, the joint may comprise carbon fibers and/or CFRC. The mats may be bonded to the plate-shaped wall segments 140 using pitch. Additionally or alternatively, in some embodiments, the sealing means may comprise carbon felts or graphite felts. The carbon mats, carbon fibers, or carbon felts may also graphitize during use of the graphitization furnace 100.

Additionally, it may be beneficial to vary the channel's 110 material properties in different section of said channel 110. For example, during heating up and the graphitization, impurities may outgas from the carbonaceous material. These impurities and generated gases may also be referred to as ash or volatiles and need to be removed from the channel 110 to acquire high-quality graphite. As a result, at least part of the channel 110 needs to be gas-permeable, while other sections are required to be gas-impermeable or less gas-permeable or may require a different material choice, due to mechanical constraints.

In these and other instances, the reference to a gas-permeable material may in particular refer to a material having a gas permeability of at least 0.3 $cm^2$/s measured according to DIN 51935:2019-07. In these and other instances, the reference to a gas-impermeable material may in particular refer to a material having a gas permeability of less than 0.3 $cm^2$/s measured according to DIN 51935:2019-07. Suitable materials having the required gas-(im)permeability are well-known to the skilled person. For instance, Sigrafine HLR, HLM and HLS grades may be used as gas-permeable material, and Sigrafine HLX and isostatic graphite grades may be used as gas-impermeable material. All of these grades are available from SGL Carbon GmbH, Germany.

Thereby, when pressure is applied to the channel 110, e.g. by feeding a purge gas into it, the ash may be removed in a directed manor through the gas-permeable parts. The channel 110 may be for example surrounded by an isolation structure encasing the channel 110, which may not be gas permeable. However, through the isolation structure a gas removal system or outlet may be disposed. Therefore, it may be expedient to have a section of the channel 110 close to the gas removal system or outlet be gas-permeable for efficient ash removal.

Accordingly, in some embodiments, at least one wall segment of the plurality of plate-shaped wall segments 140, 150 may be gas-permeable. Further, a first plate-shaped wall segment of the depicted channel 110 may be gas-permeable and a second plate-shaped wall segment may be gas-impermeable.

In a second aspect, the present disclosure relates to a method of using a graphitization furnace according to any preceding embodiment for preparing graphite from a carbonaceous raw material.

In some embodiments, the method may yield graphite having a graphitization degree of at least about 46 %, more specifically 69 %, even more specifically at least about 80 % and in particular at least about 83 %.

In some embodiments, the method may yield graphite, which is suitable for use as anode material, in particular anode material for lithium batteries.

In some embodiments, the method further comprises the step of manufacturing an anode for lithium batteries using the graphite yielded from (continuously) operating the graphitization furnace.

Although the present invention is defined in the attached claims, it should be understood that the present invention can also (alternatively) be defined in accordance with the following embodiments:

1. A graphitization furnace (100) configured to graphitize particulate carbonaceous material comprising:

a raw material inlet (160) and a product outlet (170),
and a channel (110) connecting the raw material inlet (160) and the product outlet (170); wherein the channel (110) comprises an upstream section (120) and a downstream section (130),

wherein the upstream section (120) has a first cross-sectional area closer to the raw material inlet (160) and a second cross-sectional area closer to the product outlet (170),
wherein the second cross-sectional area is larger than the first cross-sectional area; and
wherein the upstream section (120) and/or the downstream section (130) comprises a plurality of plate-shaped wall segments (140, 150), and
wherein the upstream section (120) and/or the downstream section (130) has a polygonal cross-sectional shape.

2. The graphitization furnace (100) according to embodiment 1, wherein the cross-sectional shape, perpendicular to the longitudinal axis, is polygonal with n corners, wherein n is an integer between 3 and 12, more specifically triangular, rectangular, square, or hexahedral, and in particular rectangular.

3. The graphitization furnace (100) according to any preceding embodiment, wherein the downstream section (130) has a fourth cross-sectional area closer to a product outlet (170) than a third cross-sectional area, wherein the fourth cross-sectional area is greater than the third cross-sectional area.

4. The graphitization furnace (100) according to any preceding embodiment, wherein the cross-sectional shape is formed by the plurality of plate-shaped wall segments (140, 150).

5. The graphitization furnace (100) according to any preceding embodiment, wherein the upstream section (120) and the downstream section (130) are spaced apart or adjoining, in particular adjoining.

6. The graphitization furnace (100) according to any preceding embodiment, wherein between the upstream section (120) and the downstream section (130) an edge-like or arched transition feature is disposed.

7. The graphitization furnace according to any preceding embodiment, wherein the graphitization furnace is a vertical graphitization furnace.

8. The graphitization furnace according to any preceding embodiment, wherein the graphitization furnace is a vertical graphitization furnace and the downstream section is provided in the lower half, lower third, the lower fourth, the lower fifth or the lower sixth of the channel, more specifically the lower fifth or lower sixth of the channel, and in particular in the lower fifth of the channel, wherein lower means closer to the gravitational center of the earth.

9. The graphitization furnace according to any preceding embodiment, wherein the graphitization furnace is a vertical graphitization furnace and the upstream section is provided in the lower half, the lower third, the lower fourth or the lower fifth of the channel, more specifically the lower fifth or lower sixth of the channel, and in particular in the lower fifth of the channel, wherein lower means closer to the gravitational center of the earth.

10. The graphitization furnace according to any preceding embodiment, wherein the graphitization furnace is a vertical graphitization furnace and the downstream section is provided in the lower third, the lower fourth, the lower fifth or the lower sixth of the channel, more specifically the lower fifth or lower sixth of the channel, and in particular in the lower fifth of the channel; and the upstream section is provided in the lower half, the lower third, the lower fourth or the lower fifth of the channel, more specifically the lower fifth or lower sixth of the channel, and in particular in the lower fifth of the channel, wherein lower means closer to the gravitational center of the earth.

11. The graphitization furnace (100) according to any preceding embodiment, wherein the channel (110) comprises a heating zone, a high temperature reaction zone and a cooling zone.

12. The graphitization furnace (100) according to embodiment 11, wherein the downstream section (130) is disposed in the high temperature reaction zone and/or the cooling zone, in particular the cooling zone.

13. The graphitization furnace (100) according to any preceding embodiment, wherein at least one plate-shaped wall segment of the plurality of plate-shaped wall segments (140, 150) of the channel (110) is angled radially outward relative to the central-channel-axis (200).

14. The graphitization furnace according to any preceding embodiment, wherein the upstream section has a first length L1 and the downstream section has a second length L2, more specifically the upstream section and the downstream section are adjoining and the upstream section and downstream section have a combined length L3, wherein the ratio L2/L3 is smaller than 0.5, more specifically smaller than 0.3 and in particular smaller than 0.152.

15. The graphitization furnace according to embodiment 14, wherein the ratio of L2/L3 is between about 0.03 to about 0.5, more specifically 0.05 to about 0.3 and in particular between about 0.1 to about 0.2.

16. The graphitization furnace (100) according to embodiment 14 or 15, wherein the channel (110) has a first inner diameter D1, a second inner diameter D2, a third inner diameter D3 and a fourth inner diameter D4 in the plane of the first, second, third and fourth cross-sectional area respectively, wherein the inner diameters meet the requirement

$$\frac{(D2-D1)}{L1} < \frac{(D4-D3)}{L2}.$$

17. The graphitization furnace (100) according to any preceding embodiment, wherein the graphitization furnace (100) is a continuous graphitization furnace (100) or a semi-batch graphitization furnace (100), and in particular a continuous graphitization furnace (100).

18. The graphitization furnace (100) according to any preceding embodiment, wherein the graphitization furnace (100) is configured such that material flow in the graphitization furnace (100) is gravity assisted.

19. The graphitization furnace (100) according to any one of embodiments 14 to 18, wherein the channel (110) has a first angle $\alpha_1$ defined as meeting the criterion: $\alpha_1 = \arctan\left(\frac{D2-D1}{2*L1}\right)$ and/or a second angle $\alpha_2$ defined as meeting the criterion: $\alpha_2 = \arctan\left(\frac{D4-D3}{2*L2}\right)$ and wherein $\alpha_1 < \alpha_2$.

20. The graphitization furnace according to embodiment 19, wherein the first angle $\alpha_1$ is less than 45°, 35°, 30°, 20°, 15°, 10°, 9°, 8°, 7°, 6°, 5°, 4°, 3°, 2° or 1°.

21. The graphitization furnace according to any one of embodiments 19 to 20, wherein the first angle $\alpha_1$ is between about 0.1° to about 45°, more specifically between about 0.2°and 20° and in particular between about 0.3° to about 10°.

22. The graphitization furnace according to any one of embodiments 19 to 21, wherein the first angle $\alpha_1$ is less than 20°, 15°, 10°, 9°, 8°, 7°, 6°, 5°, 4°, 3°, 2° or 1°, in particular the first angle $\alpha_1$ is between about 0.1° to about 20°, more specifically between about 0.2°and 10° and in particular between about 0.3° to about 5°.

23. The graphitization furnace according to any one of embodiments 19 to 22, wherein the first angle $\alpha_1$ is between about 0.1° to about 5°, more specifically between about 0.1° to about 2° and in particular between about 0.1° to about 1.5°.

24. The graphitization furnace according to any one of embodiments 19 to 23, wherein the first angle $\alpha_1$ is between about 0.1° to about 5°, more specifically between about 0.2° to about 2° and in particular between about 0.3° to about 1.5°.

25. The graphitization furnace according to any one of embodiments 19 to 24, wherein the second angle $\alpha_2$ is less than 45°, 35°, 30°, 20°, 15°, 10°, 9°, 8°, 7°, 6°, 5°, 4°, 3°, 2° or 1°.

26. The graphitization furnace according to any one of embodiments 19 to 25, wherein the second angle $\alpha_2$ is between about 0.1° to about 45°, more specifically between about 0.2°and 20° and in particular between about 0.3° to about 10°.

27. The graphitization furnace according to any one of embodiments 19 to 26, wherein the second angle $\alpha_2$ is less than 20°, 15°, 10°, 9°, 8°, 7°, 6°, 5°, 4°, 3°, 2° or 1°, in particular the second angle $\alpha_2$ is between about 0.1° to about 20°, more specifically between about 0.2°and 10° and in particular between about 0.3° to about 5°.

28. The graphitization furnace according to any one of embodiments 19 to 27, wherein the second angle $\alpha_2$ is between about 0.1° to about 5°, more specifically between about 0.1° to about 2° and in particular between about 0.1° to about 1.5°.

29. The graphitization furnace according to any one of embodiments 19 to 28, wherein the second angle $\alpha_2$ is between about 0.1° to about 5°, more specifically between about 0.2° to about 2° and in particular between about 0.3° to about 1.5°.

30. The graphitization furnace according to embodiment 19, wherein the first angle $\alpha_1$ is less than 45°, 35°, 30°, 20°, 15°, 10°, 9°, 8°, 7°, 6°, 5°, 4°, 3°, 2° or 1°; and the second angle $\alpha_2$ is less than 45°, 35°, 30°, 20°, 15°, 10°, 9°, 8°, 7°, 6°, 5°, 4°, 3°, 2° or 1°.

31. The graphitization furnace according to embodiment 19 or 30, wherein the first angle $\alpha_1$ is between about 0.1° to about 45°, more specifically between about 0.2°and 20° and in particular between about 0.3° to about 10°; and the second angle $\alpha_2$ is between about 0.1° to about 45°, more specifically between about 0.2°and 20° and in particular between about 0.3° to about 10°.

32. The graphitization furnace according to embodiment 19, 30 or 31, wherein the first angle $\alpha_1$ is less than 20°, 15°, 10°, 9°, 8°, 7°, 6°, 5°, 4°, 3°, 2° or 1°, in particular the first angle $\alpha_1$ is between about 0.1° to about 20°, more specifically between about 0.2°and 10° and in particular between about 0.3° to about 5°; and the second angle $\alpha_2$ is less than 20°, 15°, 10°, 9°, 8°, 7°, 6°, 5°, 4°, 3°, 2° or 1°, in particular the second angle $\alpha_2$ is between about 0.1° to about 20°, more specifically between about 0.2°and 10° and in particular between about 0.3° to about 5°.

33. The graphitization furnace according to any one of embodiments 19, 30 to 32, wherein the first angle $\alpha_1$ is between about 0.1° to about 5°, more specifically between about 0.1° to about 2° and in particular between about 0.1° to about 1.5°; and the second angle $\alpha_2$ is between about 0.1° to about 5°, more specifically between about 0.1° to about 2° and in particular between about 0.1° to about 1.5°.

34. The graphitization furnace according to any one of embodiments 19, 30 to 33, wherein the first angle $\alpha_1$ is between about 0.1° to about 5°, more specifically between about 0.2° to about 2° and in particular between about 0.3° to about 1.5°; and the second angle $\alpha_2$ is between about 0.1° to about 5°, more specifically between about 0.2° to about 2° and in particular between about 0.3° to about 1.5°.

35. The graphitization furnace according to any one of embodiments 19, 30 to 34, wherein the first angle $\alpha_1$ is between about 0.1° to about 5°, more specifically between about 0.2° to about 2° and in particular between about 0.3° to about 1.5°; and the second angle $\alpha_2$ is between about 0.1° to about 5°, more specifically between about 0.2° to about 2° and in particular between about 0.3° to about 1.5°.

36. The graphitization furnace (100) according to any preceding embodiment, wherein the second cross-sectional area is the third cross-sectional area.

37. The graphitization furnace (100) according to any preceding embodiment, wherein the graphitization furnace (100) comprises an isolation structure surrounding the channel.

38. The graphitization furnace (100) according to any preceding embodiment, wherein the wall thickness of the channel (110) is between about 5 mm to about 200 mm.

39. The graphitization furnace (100) according to any preceding embodiment, wherein the graphitization furnace (100) is a continuous graphitization furnace (100) or a semi-batch graphitization furnace (100), and in particular continuous graphitization furnace (100).

40. The graphitization furnace (100) according to any preceding embodiment, wherein the graphitization furnace (100) is configured such that material flow in the graphitization furnace (100) is gravity assisted.

41. The graphitization furnace (100) according to any preceding embodiment, wherein the graphitization furnace (100) is a vertical furnace.

42. The graphitization furnace (100) according to any preceding embodiment, wherein the channel (110) comprises or consists of graphite, in particular wherein the plurality of plate-shaped wall segments (140, 150) comprises or consists of graphite.

43. The graphitization furnace (100) according to any preceding embodiment, wherein at least one plate-shaped wall segment comprises a high-temperature-resistant hard coating.

44. The graphitization furnace (100) according to any preceding embodiment, wherein at least two plate-shaped wall segments of the plurality of plate-shaped wall segments (140, 150) are connected by at least one joint, in particular at least one detachable joint.

45. The graphitization furnace (100) according to embodiment 44, wherein the at least one joint comprises a dowel joint, a mitre joint, a cross dowel joint or a dovetail joint.

46. The graphitization furnace (100) according to embodiment 44 or 45, wherein the at least one joint comprises a screw, more specifically a carbonaceous screw, and in particular a screw comprising graphite or carbon fiber reinforced carbon (CFRC).

47. The graphitization furnace (100) according to any one of embodiments 44 to 46, wherein the at least one joint comprises a clamp.

48. The graphitization furnace (100) according to any preceding embodiments 44 to 47, wherein the plurality of plate-shaped wall segments (140, 150) is joined by wrapping, in particular by wrapping with graphite fibers and/or carbon fibers.

49. The graphitization furnace (100) according to any preceding embodiments 43 to 47, wherein the at least one joint is sealed.

50. The graphitization furnace (100) according to embodiment 48, wherein the joint comprises pitch, graphite mats, carbon mats, carbon felts and/or graphite felts.

51. The graphitization furnace (100) according to any preceding embodiment, wherein at least one wall segment of the plurality of plate-shaped wall segments (140, 150) is gas-permeable.

52. The graphitization furnace (100) according to embodiment 51, wherein a first plate-shaped wall segment is gas-permeable and a second plate-shaped wall segment is gas-impermeable.

**Claims**

1. A graphitization furnace (100) configured to graphitize particulate carbonaceous material comprising:

    a raw material inlet (160) and a product outlet (170),
    and a channel (110) connecting the raw material inlet (160) and the product outlet (170); wherein the channel (110) comprises an upstream section (120) and a downstream section (130),
    wherein the upstream section (120) has a first cross-sectional area closer to the raw material inlet (160) and a second cross-sectional area closer to the product outlet (170),
    wherein the second cross-sectional area is larger than the first cross-sectional area; and
    wherein the upstream section (120) and/or the downstream section (130) comprises a plurality of plate-shaped wall segments (140, 150), and
    wherein the upstream section (120) and/or the downstream section (130) has a polygonal cross-sectional shape.

2. The graphitization furnace (100) according to claim 1, wherein the cross-sectional shape, perpendicular to the longitudinal axis, is polygonal with n corners, wherein n is an integer between 3 and 12, more specifically triangular, rectangular, square, or hexahedral, and in particular rectangular.

3. The graphitization furnace (100) according to any preceding claim, wherein the downstream section (130) has a fourth cross-sectional area closer to a product outlet (170) than a third cross-sectional area, wherein the fourth cross-sectional area is greater than the third cross-sectional area.

4. The graphitization furnace (100) according to any preceding claim, wherein the upstream section (120) and the downstream section (130) are spaced apart or adjoining, in particular adjoining.

**5.** The graphitization furnace according to any preceding claim, wherein the graphitization furnace is a vertical graphitization furnace.

**6.** The graphitization furnace according to any preceding claim, wherein the graphitization furnace is a vertical graphitization furnace and the downstream section is provided in the lower third, the lower fourth, the lower fifth or the lower sixth of the channel, more specifically the lower fifth or lower sixth of the channel, and in particular in the lower fifth of the channel, wherein lower means closer to the gravitational center of the earth.

**7.** The graphitization furnace (100) according to any preceding claim, wherein the channel (110) comprises a heating zone, a high temperature reaction zone and a cooling zone, more specifically wherein the downstream section (130) is disposed in the high temperature reaction zone and/or the cooling zone, in particular the cooling zone.

**8.** The graphitization furnace (100) according to any preceding claim, wherein at least one plate-shaped wall segment of the plurality of plate-shaped wall segments (140, 150) of the channel (110) is angled radially outward relative to the central-channel-axis (200).

**9.** The graphitization furnace according to any preceding claim, wherein the upstream section has a first length L1 and the downstream section has a second length L2, more specifically the upstream section and the downstream section are adjoining and the upstream section and downstream section have a combined length L3, wherein the ratio L2/L3 is smaller than 0.5, more specifically smaller than 0.3 and in particular smaller than 0.2.

**10.** The graphitization furnace (100) according to any preceding claim, wherein the graphitization furnace (100) is a continuous graphitization furnace (100) or a semi-batch graphitization furnace (100), and in particular a continuous graphitization furnace (100).

**11.** The graphitization furnace (100) according to claim 9 or 10, wherein the channel (110) has a first angle $\alpha_1$ defined as meeting the criterion: $\alpha_1 = \arctan\left(\frac{D2-D1}{2*L1}\right)$ and/or a second angle $\alpha_2$ defined as meeting the criterion: $\alpha_2 = \arctan\left(\frac{D4-D3}{2*L2}\right)$ and wherein $\alpha_1 < \alpha_2$.

**12.** The graphitization furnace according to claim 11, wherein the second angle $\alpha_2$ is between about 0.1° to about 45°, more specifically between about 0.2° and 20° and in particular between about 0.3° to about 10°, more specifically wherein the second angle $\alpha_2$ is between about 0.1° to about 5°, more specifically between about 0.1° to about 2° and in particular between about 0.1° to about 1.5°.

**13.** The graphitization furnace (100) according to any preceding claim, wherein at least two plate-shaped wall segments of the plurality of plate-shaped wall segments (140, 150) are connected by at least one joint, in particular at least one detachable joint.

**14.** The graphitization furnace (100) according to any preceding claim, wherein the plurality of plate-shaped wall segments (140, 150) is joined by clamping and/or wrapping, in particular by wrapping with graphite fibers and/or carbon fibers.

**15.** The graphitization furnace (100) according to any preceding claim, wherein at least one wall segment of the plurality of plate-shaped wall segments (140, 150) is gas-permeable.

**Figure 1**

Figure 2

**Figure 3**

**Figure 4**

Europäisches
Patentamt

European
Patent Office

Office européen
des brevets

**EUROPEAN SEARCH REPORT**

Application Number

EP 23 17 0108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 725 906 A (DUISBURGER KUPFERHUETTE) 9 March 1955 (1955-03-09) | 1-12 | INV.<br>C01B32/05 |
| Y | * page 1, line 40 - page 2, line 68; figures 1-7 *<br>* page 2, lines 101-110 *<br>* the whole document * | 13-15 | C01B32/205<br>C04B11/028<br>C10B3/00<br>F27B1/10 |
| | ----- | | |
| Y | WO 2019/124466 A1 (CFC DESIGN INC [JP]) 27 June 2019 (2019-06-27) | 13,14 | |
| A | * paragraphs [0026] - [0055]; figures 1-3 *<br>* the whole document * | 1-12,15 | |
| | ----- | | |
| Y | US 2022/371898 A1 (MUCK MATTHIAS [DE] ET AL) 24 November 2022 (2022-11-24) | 15 | |
| A | * paragraphs [0046] - [0065]; figures 1-4 * | 1-14 | |
| | ----- | | |

TECHNICAL FIELDS
SEARCHED (IPC)

C01B
C10H
F27D
C04B
C10B
F27B

The present search report has been drawn up for all claims

| Place of search | Date of completion of the search | Examiner |
|---|---|---|
| The Hague | 23 October 2023 | Follens, Lana |

EPO FORM 1503 03.82 (P04C01)

## ANNEX TO THE EUROPEAN SEARCH REPORT
## ON EUROPEAN PATENT APPLICATION NO.

EP 23 17 0108

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2023

| Patent document cited in search report | | Publication date | Patent family member(s) | | Publication date |
|---|---|---|---|---|---|
| GB 725906 | A | 09-03-1955 | NONE | | |
| WO 2019124466 | A1 | 27-06-2019 | CN | 111492194 A | 04-08-2020 |
| | | | DE | 112018005977 T5 | 06-08-2020 |
| | | | JP | 6960845 B2 | 05-11-2021 |
| | | | JP | 2019113211 A | 11-07-2019 |
| | | | KR | 20200087246 A | 20-07-2020 |
| | | | WO | 2019124466 A1 | 27-06-2019 |
| US 2022371898 | A1 | 24-11-2022 | CN | 114514196 A | 17-05-2022 |
| | | | DE | 102019126394 A1 | 01-04-2021 |
| | | | EP | 4038017 A1 | 10-08-2022 |
| | | | JP | 2022550405 A | 01-12-2022 |
| | | | KR | 20220071253 A | 31-05-2022 |
| | | | TW | 202124278 A | 01-07-2021 |
| | | | US | 2022371898 A1 | 24-11-2022 |
| | | | WO | 2021063603 A1 | 08-04-2021 |

EPO FORM P0459

For more details about this annex : see Official Journal of the European Patent Office, No. 12/82